(19) Europäisches Patentamt / European Patent Office / Office européen des brevets

(11) **EP 4 556 960 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
**G01S 19/44** (2010.01)

(21) Application number: **23841941.0**

(86) International application number:
**PCT/CN2023/098706**

(22) Date of filing: **06.06.2023**

(87) International publication number:
**WO 2024/016874 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.07.2022 CN 202210844843**

(71) Applicants:
• **Qianxun Spatial Intelligence Inc.**
**Yangpu District**
**Shanghai 200438 (CN)**

• **Qianxun Spatial Intelligence Zhejiang Inc.**
**Huzhou, Zhejiang 313201 (CN)**

(72) Inventors:
• **LIU, Xiaolei**
**Shanghai 200438 (CN)**
• **WANG, Wei**
**Shanghai 200438 (CN)**
• **XU, Kun**
**Shanghai 200438 (CN)**
• **QIU, Mobo**
**Shanghai 200438 (CN)**

(74) Representative: **Kraus & Lederer PartGmbB**
**Thomas-Wimmer-Ring 15**
**80539 München (DE)**

(54) **AMBIGUITY RESOLUTION METHOD AND SYSTEM**

(57) An ambiguity resolution method and system, which relate to the technical field of positioning. The method comprises: constructing an ionosphere-free combined observation value by using pseudo-range and carrier observation values, and performing filtering to obtain an ionosphere-free combined ambiguity (101); performing filtering on non-combined pseudo-range and carrier observation values to obtain a non-combined ambiguity, and performing single-difference constraint on the non-combined ambiguity by taking the ionosphere-free combined ambiguity as a virtual ambiguity observation value (102); performing single-difference ambiguity resolution on a float solution of the filtering of the ionosphere-free combined observation value, and acquiring a single-difference ionosphere estimation value from the resolved single-difference ambiguity (103); and performing single-difference constraint on a float solution of the filtering of the non-combined observation value by taking the single-difference ionosphere estimation value as a virtual ionosphere observation value, and then performing single-difference ambiguity resolution on the float solution of the filtering of the non-combined observation value (104). By means of the ambiguity resolution method, rapid precise point positioning ambiguity resolution can be realized without the need for additional auxiliary information and the use of a combi-

nation of a plurality of observation value frequency points.

Fig. 1

**Description**

**CROSS-REFERENCE TO RELATED APPLICATION**

The present application claims the priority to Chinese Patent Application No. 202210844843.4 filed on July 18, 2022, which is incorporated herein by reference in its entirety.

**TECHNICAL FIELD**

The present application relates to the field of positioning technology, and in particular to an ambiguity resolution method and system thereof.

**BACKGROUND**

By receiving orbits, clock errors, and pseudo-range carrier hardware bias correction numbers broadcast by the server, precise point positioning (PPP) can achieve real-time centimeter-level positioning accuracy in about 10 minutes by using dual-frequency observation values and fast convergence in 5 minutes by using a certain combination of multi-frequency observation values. This technology has an uniform positioning accuracy in the global scope without regional restrictions, and therefore it has been widely used in measurement and mapping, navigation, and aviation; but in practical applications, the convergence time of PPP is still slow, which limits its application in some fields requiring fast convergence resolution; and therefore, it is necessary to carry out research on the fast convergence resolution of PPP.
Currently, fast convergence resolution schemes for precise point positioning ambiguity resolution (PPPAR) can be divided into two categories, a first scheme is to constrain relevant parameters by inputting external auxiliary information (e.g., troposphere, ionosphere, position, etc.) to achieve fast ambiguity resolution; and a second scheme is to use a plurality of combinations of different observation value frequencies to achieve fast ambiguity resolution.
In the existing satellite-based terminal fast ambiguity resolution solution, the first scheme of inputting external auxiliary information will add extra cost (e.g., if using extra ionospheric tropospheric information, the server needs to set up a large number of reference stations in a certain area for atmospheric modeling and broadcast these atmospheric information to users), and only a part of the area can be covered; and the second scheme of using multiple combinations of different observation value frequencies, has high requirements for hardware devices, and cannot be satisfied for hardware devices that do not satisfy the combination of related frequency points (having only dual-frequency data).

**SUMMARY**

The object of the present application is to provide an ambiguity resolution method and a system thereof, which can achieve the fast ambiguity resolution of PPP without additional auxiliary information or using a combination of multiple observation value frequency points.
The present application discloses an ambiguity resolution method comprising: constructing an ionosphere-free combined observation value using a pseudo-range observation value and a carrier observation value, and filtering the ionosphere-free combined observation value to obtain an ionosphere-free combination ambiguity; filtering the pseudo-range observation value and the carrier observation value that are not combined to obtain a non-combined ambiguity, and applying a single-difference constraint on the non-combined ambiguity according to the virtual ambiguity observation by taking the ionosphere-free combination ambiguity as a virtual ambiguity observation value; performing a single-difference ambiguity resolution on a floating-point solution obtained by filtering the ionosphere-free combined observation value to obtain a resolved single-difference ambiguity, and obtaining a single-difference ionospheric estimation value from the resolved single-difference ambiguity; and applying, by taking the single-difference ionospheric estimation value as a virtual ionospheric observation value, a single-difference constraint on a floating-point solution obtained by filtering the pseudo-range observation value and the carrier observation value that are not combined, and performing a single-difference ambiguity resolution on the floating-point solution obtained by filtering the pseudo-range observation value and the carrier observation value that are not combined.
In some implementations, in some embodiments, the pseudo-range observation value and carrier observation value of the ionosphere-free combined observation value are as follows:

$$\begin{cases} P_{r,IF}^{s}(t) = C_1 \cdot P_{r,1}^{s}(t) + C_2 \cdot P_{r,2}^{s}(t) \\ \Phi_{r,IF}^{s}(t) = C_1 \cdot \Phi_{r,1}^{s}(t) + C_2 \cdot \Phi_{r,2}^{s}(t) \end{cases},$$

$$C_1 = \frac{f_1^2}{f_1^2 - f_2^2}, \quad C_2 = \frac{-f_2^2}{f_1^2 - f_2^2}$$

in which $C_1$ and $C_2$ are combination coefficients, , $f_1$ and $f_2$ representing a first frequency point and a second frequency point respectively; and $P_{r,1}^{s}(t)$, $P_{r,2}^{s}(t)$, $\Phi_{r,1}^{s}(t)$, and $\Phi_{r,2}^{s}(t)$ are calculated according to a formula as follows:

$$\begin{cases} P_{r,f}^{s}(t) = \rho_r^{s} + c \cdot t_{r,sys} - c \cdot t^{s} + \alpha_r^{s} \cdot T_z + \gamma_f I_r^{s} + \left(b_{r,f} - b_f^{s}\right) + \varepsilon_{P_f} \\ \Phi_{r,f}^{s}(t) = \rho_r^{s} + c \cdot t_{r,sys} - c \cdot t^{s} + \alpha_r^{s} \cdot T_z - \gamma_f I_r^{s} + \lambda_f \cdot \left(N_{r,f}^{s} + w + B_{r,f} - B_f^{s}\right) + \varepsilon_{\Phi_f} \end{cases},$$

in which $\rho_r^{s}$ represents a collective distance of a satellite position from a receiver, $t_{r,sys}$ represents a receiver clock error, $c$ represents the speed of light, $t^s$ represents a satellite clock error, $\alpha_r^{s}$ represents a tropospheric mapping function, $T_z$ represents a tropospheric wet delay, $I_r^{s}$ represents an ionospheric delay, $\gamma_f = \lambda_1^2 / \lambda_f^2$ represents an ionospheric coefficient, $b_{r,f}$ and $b_f^{s}$ represent pseudo-range hardware delays of a satellite terminal and a receiver terminal, respectively, with respect to a frequency point $f$, $B_{r,f}$ and $B_f^{s}$ represent carrier hardware delays of the satellite terminal and the receiver terminal, respectively, with respect to the frequency point $f$, $N_{r,f}^{s}$ represents a carrier whole-cycle ambiguity, $w$ represents a phase-wrap correction, $\varepsilon_{P_f}$ and $\varepsilon_{\Phi_f}$ represent a pseudo-range noise and a carrier noise respectively, and $\lambda_f$ represents the wavelength of the frequency point $f$.

In some implementations, in some embodiments, the pseudo-range observation value and carrier observation value of the ionosphere-free combined observation value do not include an ionospheric delay.

In some implementations, in some embodiments, the applying a single-difference constraint on the non-combined ambiguity by taking the ionosphere-free combination ambiguity as a virtual ambiguity observation value comprises: applying the single-difference constraint according to an equation as follows:

$$\varphi_{IF}^{s1,s2} = C_1 \cdot \varphi_1^{s1,s2} + C_2 \cdot \varphi_2^{s1,s2} + \varepsilon_{\varphi},$$

in which $\varphi_{IF}^{s1,s2}$ represents an ionosphere-free combined ambiguity parameter single-difference estimation value of satellites S1 and S2, $\varphi_1^{s1,s2}$ and $\varphi_2^{s1,s2}$ represent carrier ambiguity parameter single-difference estimation values corresponding to a first frequency point and a second frequency point in a non-combined ambiguity of the satellites S1 and S2 respectively, and $\varepsilon_{\phi}$ represents noise of the virtual ambiguity observation value.

In some implementations, in some embodiments, the single-difference ionospheric estimation value is:

$$i\,on^{s1,s2} = \frac{res_1^{s1,s2} - res_2^{s1,s2}}{1 - \gamma_2},$$

in which $$res_1^{s1,s2} = \Phi_1^{s1,s2} - \lambda_1 \cdot \left(N_1 - B_1^{s1,s2}\right) - \lambda_1 \cdot w ,$$

$$res_2^{s1,s2} = \Phi_2^{s1,s2} - \lambda_2 \cdot \left(N_2 - B_2^{s1,s2}\right) - \lambda_2 \cdot w , \quad \Phi_1^{s1,s2} , \text{ and } \Phi_2^{s1,s2} \text{ represent non-com-}$$

bined single-difference carrier observation values, of satellites S1 and S2, corresponding to a first frequency point and a second frequency point respectively, $\lambda_1$ and $\lambda_2$ represent wavelengths of the first frequency point and the second frequency point respectively, $N_1$ and $N_2$ represent carrier whole-cycle ambiguities respectively, $B_1^{s1,s2}$ and $B_2^{s1,s2}$ represent non-combined single-difference carrier hardware delays, of the satellites S1 and S2, corresponding to the first frequency point and the second frequency point respectively, and $w$ represents a phase-wrap correction.

In some implementations, in some embodiments, the applying, by taking the single-difference ionospheric estimation value as a virtual ionospheric observation value, a single-difference constraint on a floating-point solution obtained by filtering the pseudo-range observation value and the carrier observation value that are not combined comprises: applying the single-difference constraint according to an equation as follows:

$$ion^{s1,s2} = I_r^{s1} - I_r^{s2} + \varepsilon_{ion} ,$$

in which $I_r^{s1}$ and $I_r^{s2}$ represent an ionospheric parameter estimation values obtained by filtering and estimating the pseudo-range observation value and carrier observation value that are received and not combined of the satellites S1 and S2, respectively, and $\varepsilon_{ion}$ represents noise of the virtual ionospheric observation value.

In some implementations, in some embodiments, before the constructing an ionosphere-free combined observation value using a pseudo-range observation value and a carrier observation value, the ambiguity resolution method provided in the present application further comprises: obtaining the pseudo-range observation value, the carrier observation value, a broadcast ephemeris, and a differential correction, and pre-processing the pseudo-range observation value and the carrier observation value, wherein the pre-processing the pseudo-range observation value and the carrier observation value comprises calculating a satellite position, detecting a cycle slip, and controlling data quality.

The present application discloses an ambiguity resolution system comprising: an ionosphere-free combination filtering unit for constructing an ionosphere-free combined observation value using a pseudo-range observation value and a carrier observation value, and filtering the ionosphere-free combined observation value to obtain an ionosphere-free combination ambiguity; a non-combined filtering unit for filtering the pseudo-range observation value and the carrier observation value that are not combined to obtain a non-combined ambiguity, and applying a single-difference constraint on the non-combined ambiguity by taking the ionosphere-free combination ambiguity as a virtual ambiguity observation value; an ionosphere-free combination ambiguity resolution unit for performing a single-difference ambiguity resolution on a floating-point solution obtained by filtering the ionosphere-free combined observation value to obtain a resolved single-difference ambiguity, and obtaining a single-difference ionospheric estimation value from the resolved single-difference ambiguity; and a non-combined ambiguity resolution unit for applying, by taking the single-difference ionospheric estimation value as a virtual ionospheric observation value, a single-difference constraint on a floating-point solution obtained by filtering the pseudo-range observation value and the carrier observation value that are not combined, and performing a single-difference ambiguity resolution on the floating-point solution obtained by filtering the pseudo-range observation value and the carrier observation value that are not combined.

The present application discloses an ambiguity resolution system comprising: a memory for storing computer-executable instructions; and a processor coupled to the memory for implementing the steps in the ambiguity resolution method described above when executing the computer-executable instructions.

The present application further discloses a computer readable storage medium having computer program instructions stored thereon, which implement the steps in the ambiguity resolution method described above when executed by a processor.

In embodiments of the present application, using an ionosphere-free and non-combined fusion processing mode, the ionosphere-free ambiguity resolution information is taken as a prior information to accelerate the non-combined ambiguity resolution in order to achieve an optimal solution. The present application may require neither additional auxiliary information nor a combination of multiple observation value frequency points.

The specification of the present application includes a large number of technical features, which are distributed in embodiments, and if all possible combinations of technical features (i.e., embodiments) of the present application are listed, it may make the specification unduly long. In order to avoid this problem, the technical features, disclosed in the above summary, the following embodiments and examples, and the drawings, of the present application may be freely combined with each other to constitute various new technical solutions (all of which should be regarded as having been described in the present application), unless such a combination of technical features is technically infeasible. For example, features A, B, and C are disclosed in an example, and features A, B, D, and E are disclosed in another example. Features C and D are functionally equivalent technical means and are used alternatively instead of being implemented simultaneously; feature E may be technically combined with feature C; and the combination of A+B+C+D should not be considered as disclosed due to technical infeasibility, whereas the combination of A+B+C+E should be deemed as already disclosed.

**BRIEF DESCRIPTION OF THE DRAWINGS**

Fig. 1 is a schematic flow chart of an ambiguity resolution method provided in embodiments of the present application.
Fig. 2 is a data processing overall flow chart provided in certain embodiments of the present application.
Fig. 3 is a data processing flow chart of a floating-point filtering module provided in certain embodiments of the present application.
Fig. 4 is a data processing flow chart of an ambiguity resolution module provided in certain embodiments of the present application.
Fig. 5 is a schematic structural view of an ambiguity resolution system provided in embodiments of the present application.

**DETAILED DESCRIPTION**

Numerous technical details are provided in the following description to make the present application better understood by readers. However, a person skill in the art may understand that the technical solutions claimed by the present application can be achieved without these technical details or various changes and modifications based on the following embodiments.

In order to make the purposes, technical solutions and advantages of embodiments of the present application clearer, the embodiments of the present application will be described in detail with reference to the accompanying drawings.

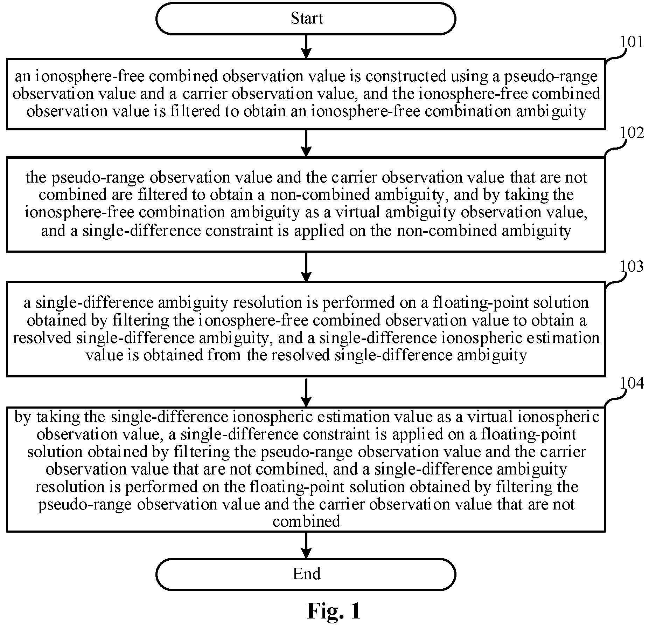

The embodiment of the present application provides an ambiguity resolution method, the flow of which is shown in Fig. 1, and the method comprises the following steps.

In step 101, an ionosphere-free combined observation value is constructed using a pseudo-range observation value and a carrier observation value, and the ionosphere-free combined observation value is filtered to obtain an ionosphere-free combination ambiguity.

In some implementations, the pseudo-range observation value $P_{r,f}^s(t)$ and the carrier observation value $\Phi_{r,f}^s(t)$ of an epoch $t$ can be represented by the formula (1) as follows:

$$\begin{cases} P_{r,f}^s(t) = \rho_r^s + c \cdot t_{r,sys} - c \cdot t^s + \alpha_r^s \cdot T_z + \gamma_f I_r^s + \left(b_{r,f} - b_f^s\right) + \varepsilon_{P_f} \\ \Phi_{r,f}^s(t) = \rho_r^s + c \cdot t_{r,sys} - c \cdot t^s + \alpha_r^s \cdot T_z - \gamma_f I_r^s + \lambda_f \cdot \left(N_{r,f}^s + w + B_{r,f} - B_f^s\right) + \varepsilon_{\Phi_f} \end{cases} \quad (1)$$

in which $\rho_r^s$ represents a collective distance of a satellite position from a receiver, $t_{r,sys}$ represents a receiver clock error, $c$ represents the speed of light, $t^s$ represents a satellite clock error, $\alpha_r^s$ represents a tropospheric mapping function, $T_z$ represents a tropospheric wet delay, $I_r^s$ represents an ionospheric delay, $\gamma_f = \lambda_1^2 / \lambda_f^2$ represents an ionospheric coefficient, $b_{r,f}$ and $b_f^s$ represent pseudo-range hardware delays of a satellite terminal and a receiver terminal, respectively, with respect to a frequency point $f$, $B_{r,f}$ and $B_f^s$ represent carrier hardware delays of the satellite terminal and the receiver terminal, respectively, with respect to the frequency point $f$, $N_{r,f}^s$ represents a carrier whole-cycle ambiguity, $w$ represents a phase-wrap correction, $\varepsilon_{P_f}$ and $\varepsilon_{\Phi_f}$ represent a pseudo-range noise and a carrier noise respectively, $f$ represents a frequency point, and $\lambda_f$ represents the wavelength of the frequency point $f$.

In some embodiments, the pseudo-range observation value and carrier observation value of the ionosphere-free combined observation value can be represented by the formula (2) as follows:

$$\begin{cases} P^s_{r,IF}(t) = C_1 \cdot P^s_{r,1}(t) + C_2 \cdot P^s_{r,2}(t) \\ \Phi^s_{r,IF}(t) = C_1 \cdot \Phi^s_{r,1}(t) + C_2 \cdot \Phi^s_{r,2}(t) \end{cases} \tag{2}$$

$$C_1 = \frac{f_1^2}{f_1^2 - f_2^2}, \quad C_2 = \frac{-f_2^2}{f_1^2 - f_2^2}$$

in which $C_1$ and $C_2$ are combination coefficients, , $f_1$ and $f_2$ representing a first frequency point and a second frequency point respectively; and $P^s_{r,1}(t)$, $P^s_{r,2}(t)$, $\Phi^s_{r,1}(t)$, and $\Phi^s_{r,2}(t)$ are calculated according to the above formula (1).

It should be understood that the pseudo-range observation value $P^s_{r,f}(t)$ and carrier observation value $\Phi^s_{r,f}(t)$ of the ionosphere-free combined observation value may not include ionospheric delays by setting the combination coefficients $C_1$ and $C_2$.

Furthermore, the ionosphere-free combination ambiguity is taken as a virtual ambiguity observation value, and a single-difference constraint is applied on the non-combined ambiguity according to the virtual ambiguity observation value.

In some embodiments, before the step of constructing an ionosphere-free combined observation value using a pseudo-range observation value and a carrier observation value, the ambiguity resolution method provided in embodiments of the present application further comprises: obtaining the pseudo-range observation value, the carrier observation value, a broadcast ephemeris, and a differential correction, and pre-processing the pseudo-range observation value and the carrier observation value, wherein the pre-processing the pseudo-range observation value and the carrier observation value comprises calculating a satellite position, detecting a cycle slip, and controlling data quality.

In step 102, the pseudo-range observation value and the carrier observation value that are not combined are filtered to obtain a non-combined ambiguity.

In some embodiments, the step of applying a single-difference constraint on the non-combined ambiguity by taking the ionosphere-free combination ambiguity as a virtual ambiguity observation value comprises: applying the single-difference constraint according to the formula (3) as follows:

$$\varphi^{s1,s2}_{IF} = C_1 \cdot \varphi^{s1,s2}_1 + C_2 \cdot \varphi^{s1,s2}_2 + \varepsilon_\varphi \tag{3}$$

in which $\varphi^{s1,s2}_{IF}$ represents an ionosphere-free combined ambiguity parameter single-difference estimation value of satellites S1 and S2, $\varphi^{s1,s2}_1$ and $\varphi^{s1,s2}_2$ represent carrier ambiguity parameter single-difference estimation values corresponding to a first frequency point and a second frequency point, respectively, in a non-combined ambiguity of the satellites S1 and S2, and $\varepsilon_\phi$ represents noise of the virtual ambiguity observation value, so that users can determine the constrained variance of this virtual observation formula.

In step 103, a single-difference ambiguity resolution is performed on a floating-point solution obtained by filtering the ionosphere-free combined observation value to obtain a resolved single-difference ambiguity, and a single-difference ionospheric estimation value is obtained from the resolved single-difference ambiguity.

In some embodiments, the single-difference ionosphere estimation value is represented by the formula (4) as follows:

$$i\,on^{s1,s2} = \frac{res_1^{s1,s2} - res_2^{s1,s2}}{1 - \gamma_2} \qquad (4)$$

in which $res_1^{s1,s2} = \Phi_1^{s1,s2} - \lambda_1 \cdot \left(N_1 - B_1^{s1,s2}\right) - \lambda_1 \cdot w$,

$res_2^{s1,s2} = \Phi_2^{s1,s2} - \lambda_2 \cdot \left(N_2 - B_2^{s1,s2}\right) - \lambda_2 \cdot w$. $\Phi_1^{s1,s2}$ and $\Phi_2^{s1,s2}$ represent non-combined single-difference carrier observation values, of satellites S1 and S2, corresponding to a first frequency point and a second frequency point respectively, $\lambda_1$ and $\lambda_2$ represent wavelengths of the first frequency point and the second frequency point respectively, $N_1$ and $N_2$ represent carrier whole-cycle ambiguities respectively, $B_1^{s1,s2}$ and $B_2^{s1,s2}$ represent non-combined single-difference carrier hardware delays, of the satellites S1 and S2, corresponding to the first frequency point and the second frequency point respectively, and $w$ represents a phase-wrap correction.

In step 104, by taking the single-difference ionospheric estimation value as a virtual ionospheric observation value, a single-difference constraint is applied on a floating-point solution obtained by filtering the pseudo-range observation value and the carrier observation value that are not combined.

In some embodiments, the step of applying, by taking the single-difference ionospheric estimation value as a virtual ionospheric observation value, a single-difference constraint on a floating-point solution obtained by filtering the pseudo-range observation value and the carrier observation value that are not combined comprises: applying the single-difference constraint according to the formula (5) as follows:

$$i\,on^{s1,s2} = I_r^{s1} - I_r^{s2} + \varepsilon_{i\,on} \qquad (5)$$

in which $I_r^{s1}$ and $I_r^{s2}$ represent an ionospheric parameter estimation values obtained by filtering and estimating the pseudo-range observation value and carrier observation value that are received and not combined of the satellites S1 and S2, respectively, and $\varepsilon_{i\,on}$ represents noise of the virtual ionospheric observation value, so that users can determine the constrained variance of this virtual observation formula.

Furthermore, a single-difference ambiguity resolution is performed on the floating-point solution obtained by filtering the pseudo-range observation value and the carrier observation value that are not combined.

In this embodiment, using an ionosphere-free and non-combined fusion processing mode, the ionosphere-free ambiguity resolution information is taken as a prior information to accelerate the non-combined ambiguity resolution, so that an optimal solution is achieved.

For better understanding of the embodiments of the present application, the following describes with reference to a specific example, in which the details are set forth primarily to facilitate understanding and are not intended to limit the scope of the present application.

In the present application, considering the factors such as cost and hardware device, neither additional auxiliary information nor a combination of multiple observation value frequency points may be used in an embodiment of the present application, and only proceeding with the PPPAR algorithm itself, the problem is solved by aspects as follows: (1) at the floating-point filtering level, ionosphere-free combined filtering and non-combined filtering are carried out simultaneously; (2) at the ambiguity resolution level, firstly, the ionosphere-free combined ambiguity resolution is carried out, and an ionospheric information is extracted from the fixed ambiguity information to constrain a non-combined floating point solution, and then the non-combined ambiguity resolution is performed.

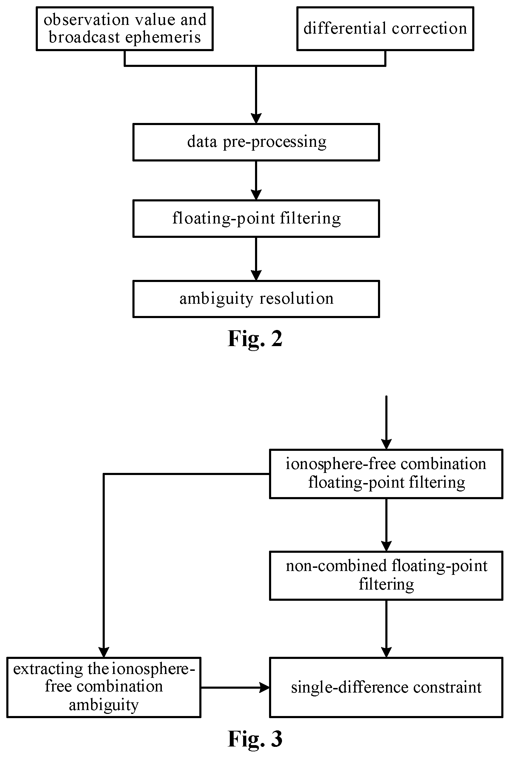

The present application may provide an embodiment essentially including two parts, which are a floating-point filtering module and an ambiguity resolution module. In both modules, the ionosphere-free combination filter and the non-combination filter coexist. Fig. 2 shows a data processing overall flow chart.

1. the solving of the floating-point filtering module

Fig. 3 shows a data processing flow of the solving of the floating-point filtering module, and the details are as follows: (1) the ionosphere-free combined observation value is filtered, i.e., an ionosphere-free combination floating-point filtering in Fig. 3; (2) the non-combined observation value (for pseudo-ranges and carriers) is filtered, i.e., a non-combined floating-point filtering in Fig. 3; (3) the ionosphere-free combination ambiguity is extracted from the result of the ionosphere-free combination filtering, i.e., extracting the ionosphere-free combination ambiguity in Fig. 3; (4) the extracted ionosphere-free combination ambiguity information is taken as the virtual observation value, and the single-difference constraint is applied on the non-combination ambiguity, i.e., a single-difference constraint in Fig. 3.

2. the processing flow of the ambiguity resolution module

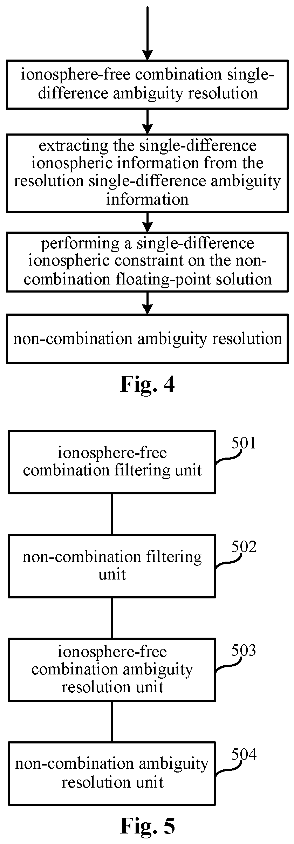

Fig. 4 shows a data processing flow of the ambiguity resolution module, and the details are as follows: (1) the single-differenced ambiguity resolution is performed on the ionosphere-free combination floating-point solution, i.e., an ionosphere-free combination single-difference ambiguity resolution in Fig. 4; (2) the single-difference ionospheric information is extracted from the resolved single-difference ambiguity information described above, i.e., extracting the single-difference ionospheric information from the resolution single-difference ambiguity information in Fig. 4; (3) the single-difference ionospheric information is taken as a virtual ionospheric observation value, and a constraint is applied on the non-combination floating-point solution according to the virtual ionospheric observation value, i.e., applying a single-difference ionospheric constraint on the non-combination floating-point solution in Fig. 4; (4) a single-difference ambiguity resolution is performed on the non-combination floating-point solution, i.e., a non-combination ambiguity resolution in Fig. 4.

Embodiments of the present application provides an ambiguity resolution system, the structure of which is as shown in Fig. 5, and the ambiguity resolution system comprises: an ionosphere-free combination filtering unit 501, a non-combination filtering unit 502, an ionosphere-free combination ambiguity resolution unit 503, and a non-combination ambiguity resolution unit 504.

An ionosphere-free combination filtering unit 501 is for constructing an ionosphere-free combined observation value using a pseudo-range observation value and a carrier observation value, and filtering the ionosphere-free combined observation value to obtain an ionosphere-free combination ambiguity. A non-combined filtering unit 502 is for filtering the pseudo-range observation value and the carrier observation value that are not combined to obtain a non-combined ambiguity, and applying a single-difference constraint on the non-combined ambiguity by taking the ionosphere-free combination ambiguity as a virtual ambiguity observation value. An ionosphere-free combination ambiguity resolution unit 503 is for performing a single-difference ambiguity resolution on a floating-point solution obtained by filtering the ionosphere-free combined observation value to obtain a resolved single-difference ambiguity, and obtaining a single-difference ionospheric estimation value from the resolved single-difference ambiguity. A non-combined ambiguity resolution unit 504 is for applying, by taking the single-difference ionospheric estimation value as a virtual ionospheric observation value, a single-difference constraint on a floating-point solution obtained by filtering the pseudo-range observation value and the carrier observation value that are not combined, and performing a single-difference ambiguity resolution on the floating-point solution obtained by filtering the pseudo-range observation value and the carrier observation value that are not combined.

It should be noted that those skilled in the art should understand that the functions implemented by the various modules shown in the embodiments of the above-described ambiguity resolution system can be understood with reference to the related description of the ambiguity resolution method described above. The functions of the various modules shown in the embodiments of the ambiguity resolution system described above may be implemented by programs (executable instructions) running on a processor, or may be implemented by specific logic circuits. The ambiguity resolution system provided in embodiments of the present application, if implemented in the form of the software functional module and sold or used as a stand-alone product, may also be stored in a computer readable storage medium. Based on this, the embodiments of the present application in essence, i.e., in part contributing to the prior art, may be embodied in the form of a software product stored in a storage medium comprising instructions for causing a computer device, which may be a personal computer, a server, or a network device, to perform all or part of the methods in the embodiments of the present application. The above-mentioned storage medium comprises: various media can store the program code, such as a U-disk, a removable hard disk, a read only memory (ROM), a magnetic disk, or an optical disk. In this way, embodiments of the present application are not limited to any specific combination of hardware and software.

Accordingly, embodiments of the present application further provide a computer-readable storage medium, computer program instructions are stored on the computer-readable storage medium; when the computer program instructions are executed by the processor, the embodiments of the method provided in the present application are implemented. The computer readable medium includes a permanent/non-permanent medium, or a removable/non-removable medium, which may achieve storage of information by any method or technology. The information may be computer readable instructions, data structures, modules of a program, or other data. Examples of the computer storage medium include, but are not limited to, a phase random access memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a compact disc read only memory (CD-ROM), a digital versatile disc (DVD) or other optical storage, a magnetic cassette, magnetic tape magnetic disk storage or other magnetic storage devices, or any other non-transmission medium, which may be used for storing information accessible to the computing device. As defined herein, the computer readable medium does not include a transitory media such as a modulated data signal or a carrier wave.

In addition, embodiments of the present application further provide an ambiguity resolution system comprising a memory and a processor, wherein the memory is for storing computer executable instructions; the processor is coupled to the memory for, when the computer-executable instructions in the memory are executed, implementing the steps of the various method embodiments described above. The processor may be a central processing unit (CPU), or may be a general purpose processor, a digital signal processor (DSP), an application specific integrated circuit (ASIC). The aforementioned memory may be a read-only memory (ROM), a random access memory (RAM), a flash memory (Flash), a hard disk, or a solid state hard disk. The steps of the methods disclosed in the embodiments of the present application may be implemented directly in a hardware processor, or in a combination of hardware and software modules in a processor.

It should be noted that, in the present application, the relational terms, such as first and second, are used merely to distinguish one entity or operation from another entity or operation, without necessarily requiring or implying any actual such relationships or orders for these entities or operations. Moreover, the terms "comprise", "include", or any other variants thereof, are intended to represent a non-exclusive inclusion, such that a process, method, article or device including a series of elements includes not only those elements, but also other elements that are not explicitly listed or elements inherent to such a process, method, article or device. Without more constraints, the elements following an expression "comprise/include one..." do not exclude the existence of additional identical elements in the process, method, commodity or device that includes the elements. In the present application, performing an act according to an element means at least performing the act according to the element, in which there are two cases as follows: the act is performed only in accordance with the element; or the act is performed in accordance with the element and other elements. Expressions such as "a plurality of", "multiple times", "various" mean "two or more", "two or more times", "two or more kinds", respectively.

All documents referred to in this specification are considered to be incorporated in their entirety into the present application to serve as a basis for amendments, if necessary. In addition, it should be understood that the foregoing description is merely preferred embodiments of the present application and is not intended to limit the scope of the present application. Therefore, any omissions, modifications, equivalent alternatives, and improvements that are made within the gist and the principle of one or more embodiments of the present specification should be included in the protection scope of one or more embodiments of the present specification.

Under some conditions, acts or steps recited in the claims may be executed in an order different from that in the embodiments and still achieve desired results. In addition, the processes depicted in the drawings do not necessarily require the particular order or sequential order as shown to achieve the desired results. Multi-tasking processing and parallel processing are possible or may be beneficial in some implementations.

**Claims**

1. An ambiguity resolution method, comprising:

   constructing an ionosphere-free combined observation value using a pseudo-range observation value and a carrier observation value, and filtering the ionosphere-free combined observation value to obtain an ionosphere-free combination ambiguity;
   filtering the pseudo-range observation value and the carrier observation value that are not combined to obtain a non-combined ambiguity, and applying a single-difference constraint on the non-combined ambiguity by taking the ionosphere-free combination ambiguity as a virtual ambiguity observation value;
   performing a single-difference ambiguity resolution on a floating-point solution obtained by filtering the ionosphere-free combined observation value to obtain a resolved single-difference ambiguity, and obtaining a single-difference ionospheric estimation value from the resolved single-difference ambiguity; and
   applying, by taking the single-difference ionospheric estimation value as a virtual ionospheric observation value, a single-difference constraint on a floating-point solution obtained by filtering the pseudo-range observation value and the carrier observation value that are not combined, and performing a single-difference ambiguity resolution on the floating-point solution obtained by filtering the pseudo-range observation value and the carrier observation value that are not combined.

2. The ambiguity resolution method according to claim **1,** wherein the pseudo-range observation value and the carrier observation value of the ionosphere-free combined observation value are respectively as follows:

$$\begin{cases} P_{r,IF}^s(t) = C_1 \cdot P_{r,1}^s(t) + C_2 \cdot P_{r,2}^s(t) \\ \Phi_{r,IF}^s(t) = C_1 \cdot \Phi_{r,1}^s(t) + C_2 \cdot \Phi_{r,2}^s(t) \end{cases}$$

$$C_1 = \frac{f_1^2}{f_1^2 - f_2^2}, \qquad C_2 = \frac{-f_2^2}{f_1^2 - f_2^2}$$

in which $C_1$ and $C_2$ are combination coefficients, , and $f_1$ and $f_2$ represent a first frequency point and a second frequency point respectively; and $P_{r,1}^s(t)$, $P_{r,2}^s(t)$, $\Phi_{r,1}^s(t)$, and $\Phi_{r,2}^s(t)$ are calculated according to formulas as follows:

$$\begin{cases} P_{r,f}^s(t) = \rho_r^s + c \cdot t_{r,sys} - c \cdot t^s + \alpha_r^s \cdot T_z + \gamma_f I_r^s + \left(b_{r,f} - b_f^s\right) + \varepsilon_{P_f} \\ \Phi_{r,f}^s(t) = \rho_r^s + c \cdot t_{r,sys} - c \cdot t^s + \alpha_r^s \cdot T_z - \gamma_f I_r^s + \lambda_f \cdot \left(N_{r,f}^s + w + B_{r,f} - B_f^s\right) + \varepsilon_{\Phi_f} \end{cases}$$

in which $\rho_r^s$ represents a collective distance of a satellite position from a receiver, $t_{r,sys}$ represents a receiver clock error, $c$ represents the speed of light, $t^s$ represents a satellite clock error, $\alpha_r^s$ represents a tropospheric mapping function, $T_z$ represents a tropospheric wet delay, $I_r^s$ represents an ionospheric delay, $\gamma_f = \lambda_1^2 / \lambda_f^2$ represents an ionospheric coefficient, $b_{r,f}$ and $b_f^s$ represent pseudo-range hardware delays of a satellite terminal and a receiver terminal, respectively, with respect to a frequency point $f$, $B_{r,f}$ and $B_f^s$ represent carrier hardware delays of the satellite terminal and the receiver terminal, respectively, with respect to the frequency point $f$, $N_{r,f}^s$ represents a carrier whole-cycle ambiguity, $w$ represents a phase-wrap correction, $\varepsilon_{P_f}$ and $\varepsilon_{\Phi f}$ represent a pseudo-range noise and a carrier noise respectively, and $\lambda_f$ represents a wavelength of the frequency point $f$.

3. The ambiguity resolution method according to claim 1, wherein the pseudo-range observation value and carrier observation value of the ionosphere-free combined observation value do not comprise an ionospheric delay.

4. The ambiguity resolution method according to claim 1, wherein the applying a single-difference constraint on the non-combined ambiguity by taking the ionosphere-free combination ambiguity as a virtual ambiguity observation value comprises:

applying the single-difference constraint according to an equation as follows:

$$\varphi_{IF}^{s1,s2} = C_1 \cdot \varphi_1^{s1,s2} + C_2 \cdot \varphi_2^{s1,s2} + \varepsilon_{\varphi},$$

in which $\varphi_{IF}^{s1,s2}$ represents an ionosphere-free combination ambiguity parameter single-difference estimation value of satellites S1 and S2, $\varphi_1^{s1,s2}$ and $\varphi_2^{s1,s2}$ represent carrier ambiguity parameter single-difference estimation values corresponding to a first frequency point and a second frequency point, respectively, in a non-combined ambiguity of the satellites S1 and S2, and $\varepsilon_{\phi}$ represents noise of the virtual ambiguity observation value.

5. The ambiguity resolution method according to claim 1, wherein the single-difference ionospheric estimation value is

$$i\,on^{s1,s2} = \frac{res_1^{s1,s2} - res_2^{s1,s2}}{1 - \gamma_2},$$

in which

$$res_1^{s1,s2} = \Phi_1^{s1,s2} - \lambda_1 \cdot \left(N_1 - B_1^{s1,s2}\right) - \lambda_1 \cdot w$$

$$res_2^{s1,s2} = \Phi_2^{s1,s2} - \lambda_2 \cdot \left(N_2 - B_2^{s1,s2}\right) - \lambda_2 \cdot w$$

$\Phi_1^{s1,s2}$ and $\Phi_2^{s1,s2}$ represent non-combined single-difference carrier observation values of satellites S1 and S2 corresponding to a first frequency point and a second frequency point respectively,

$\lambda_1$ and $\lambda_2$ represent wavelengths of the first frequency point and the second frequency point respectively,

$N_1$ and $N_2$ each represent a carrier whole-cycle ambiguity,

$B_1^{s1,s2}$ and $B_2^{s1,s2}$ represent non-combined single-difference carrier hardware delays of the satellites S1 and S2 corresponding to the first frequency point and the second frequency point respectively, and

$w$ represents a phase-wrap correction.

6. The ambiguity resolution method according to claim 5, wherein the applying, by taking the single-difference ionospheric estimation value as a virtual ionospheric observation value, a single-difference constraint on a floating-point solution obtained by filtering the pseudo-range observation value and the carrier observation value that are not combined comprises:

applying the single-difference constraint according to an equation as follows:

$$i\,on^{s1,s2} = I_r^{s1} - I_r^{s2} + \varepsilon_{i\,on}\,,$$

in which $I_r^{s1}$ and $I_r^{s2}$ represent ionospheric parameter estimation values obtained by filtering and estimating the pseudo-range observation value and the carrier observation value that are received and not combined, of the satellites S1 and S2 respectively, and

$\varepsilon_{i\,on}$ represents noise of the virtual ionospheric observation value.

7. The ambiguity resolution method according to claim 1, wherein before the constructing an ionosphere-free combined observation value using a pseudo-range observation value and a carrier observation value, the method further comprises:
obtaining the pseudo-range observation value, the carrier observation value, a broadcast ephemeris, and a differential correction, and pre-processing the pseudo-range observation value and the carrier observation value, wherein the pre-processing the pseudo-range observation value and the carrier observation value comprises calculating a satellite position, detecting a cycle slip, and controlling data quality.

8. An ambiguity resolution system, comprising:

an ionosphere-free combination filtering unit for constructing an ionosphere-free combined observation value using a pseudo-range observation value and a carrier observation value, and filtering the ionosphere-free combined observation value to obtain an ionosphere-free combination ambiguity;
a non-combined filtering unit for filtering the pseudo-range observation value and the carrier observation value that are not combined to obtain a non-combined ambiguity, and applying a single-difference constraint on the non-combined ambiguity by taking the ionosphere-free combination ambiguity as a virtual ambiguity observation value;
an ionosphere-free combination ambiguity resolution unit for performing a single-difference ambiguity resolution on a floating-point solution obtained by filtering the ionosphere-free combined observation value to obtain a resolved single-difference ambiguity, and obtaining a single-difference ionospheric estimation value from the resolved single-difference ambiguity;
a non-combined ambiguity resolution unit for applying, by taking the single-difference ionospheric estimation value as a virtual ionospheric observation value, a single-difference constraint on a floating-point solution obtained by filtering the pseudo-range observation value and the carrier observation value that are not combined, and performing a single-difference ambiguity resolution on the floating-point solution obtained by filtering the pseudo-range observation value and the carrier observation value that are not combined.

9.  An ambiguity resolution system, comprising:

    a memory for storing computer-executable instructions;
    a processor coupled to the memory for implementing the steps in the ambiguity resolution method according to any one of claims 1 to 7 when executing the computer-executable instructions.

10. A computer readable storage medium having computer program instructions stored thereon, which, when executed by a processor, implement the ambiguity resolution method according to any one of claims 1 to 7 to be implemented.

Start

an ionosphere-free combined observation value is constructed using a pseudo-range observation value and a carrier observation value, and the ionosphere-free combined observation value is filtered to obtain an ionosphere-free combination ambiguity

101

the pseudo-range observation value and the carrier observation value that are not combined are filtered to obtain a non-combined ambiguity, and by taking the ionosphere-free combination ambiguity as a virtual ambiguity observation value, and a single-difference constraint is applied on the non-combined ambiguity

102

a single-difference ambiguity resolution is performed on a floating-point solution obtained by filtering the ionosphere-free combined observation value to obtain a resolved single-difference ambiguity, and a single-difference ionospheric estimation value is obtained from the resolved single-difference ambiguity

103

by taking the single-difference ionospheric estimation value as a virtual ionospheric observation value, a single-difference constraint is applied on a floating-point solution obtained by filtering the pseudo-range observation value and the carrier observation value that are not combined, and a single-difference ambiguity resolution is performed on the floating-point solution obtained by filtering the pseudo-range observation value and the carrier observation value that are not combined

104

End

**Fig. 1**

```
┌──────────────────────┐        ┌──────────────────────┐
│ observation value and│        │ differential correction│
│  broadcast ephemeris │        └──────────────────────┘
└──────────────────────┘
            │                              │
            └──────────────┬───────────────┘
                           ▼
              ┌─────────────────────────┐
              │    data pre-processing   │
              └─────────────────────────┘
                           │
                           ▼
              ┌─────────────────────────┐
              │  floating-point filtering│
              └─────────────────────────┘
                           │
                           ▼
              ┌─────────────────────────┐
              │   ambiguity resolution   │
              └─────────────────────────┘
```

**Fig. 2**

```
                                        │
                                        ▼
                          ┌───────────────────────────┐
          ┌───────────────│ ionosphere-free combination│
          │               │   floating-point filtering │
          │               └───────────────────────────┘
          │                            │
          │                            ▼
          │               ┌───────────────────────────┐
          │               │  non-combined floating-point│
          │               │          filtering          │
          │               └───────────────────────────┘
          │                            │
          ▼                            ▼
┌──────────────────────┐   ┌───────────────────────────┐
│ extracting the ionosphere-│ single-difference constraint│
│   free combination    │──▶│                            │
│      ambiguity        │   └───────────────────────────┘
└──────────────────────┘
```

**Fig. 3**

ionosphere-free combination single-difference ambiguity resolution

↓

extracting the single-difference ionospheric information from the resolution single-difference ambiguity information

↓

performing a single-difference ionospheric constraint on the non-combination floating-point solution

↓

non-combination ambiguity resolution

**Fig. 4**

ionosphere-free combination filtering unit — 501

non-combination filtering unit — 502

ionosphere-free combination ambiguity resolution unit — 503

non-combination ambiguity resolution unit — 504

**Fig. 5**

## INTERNATIONAL SEARCH REPORT

| International application No. |
|---|
| **PCT/CN2023/098706** |

### A. CLASSIFICATION OF SUBJECT MATTER

G01S 19/44(2010.01)i

According to International Patent Classification (IPC) or to both national classification and IPC

### B. FIELDS SEARCHED

Minimum documentation searched (classification system followed by classification symbols)

IPC: G01S 19/-

Documentation searched other than minimum documentation to the extent that such documents are included in the fields searched

Electronic data base consulted during the international search (name of data base and, where practicable, search terms used)

CNTXT, ENTXTC, DWPI, CNKI: 千寻位置网络, 刘晓磊, 王伟, 徐坤, 邱模波, 模糊度, 固定, 电离层, 组合, 载波, 伪距, 距离, 相位, 非组合, 约束, 虚拟, 观测, 单差, 电离层, 无电离层, ambiguity, fix, ionosphere, ionosphere 3w free, carrier, range, pseudo 3w range, phase, combine, difference, restrict, observe, virtual

### C. DOCUMENTS CONSIDERED TO BE RELEVANT

| Category* | Citation of document, with indication, where appropriate, of the relevant passages | Relevant to claim No. |
|---|---|---|
| PX | CN 115220077 A (QIANXUN POSITION NETWORK CO., LTD. et al.) 21 October 2022 (2022-10-21) <br> claims 1-10 | 1-10 |
| A | 马小雪 等 (MA, Xiaoxue et al.). "固定模糊度的GLONASS卫星超快速轨道确定 (Ultra-rapid Orbit Determination of GLONASS Satellite After Ambiguity is Fixed)" <br> 武汉大学学报信息科学版 (GEOMATICS AND INFORMATION SCIENCE OF WUHAN UNIVERSITY, Vol. 46, No. 12, 31 December 2021 (2021-12-31), pp. 1932-1940 <br> ISSN: 1671-8860, <br> pp. 1933-1934, and section 1 | 1-10 |
| A | CN 111273327 A (China PLA Unit 61081 et al.) 12 June 2020 (2020-06-12) <br> entire document | 1-10 |
| A | CN 103323867 A (WUHAN UNIVERSITY) 25 September 2013 (2013-09-25) <br> entire document | 1-10 |
| A | US 2014002300 A1 (TRIMBLE NAVIGATION LTD.) 02 January 2014 (2014-01-02) <br> entire document | 1-10 |

☑ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 August 2023** | **01 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/098706**

### C.    DOCUMENTS CONSIDERED TO BE RELEVANT

| Category* | Citation of document, with indication, where appropriate, of the relevant passages | Relevant to claim No. |
|---|---|---|
| A | US 2011267228 A1 (TRIMBLE NAVIGATION LTD.) 03 November 2011 (2011-11-03)<br>      entire document | 1-10 |
| A | 李博峰 等 (LI, Bofeng et al.). "无电离层组合, Uofc和非组合精密单点定位观测模型比较 (Comparison of Ionosphere-free, Uofc and Uncombined PPP Observation Models)"<br>测绘学报 (Acta Geodaetica et Cartographica Sinica),<br>Vol. 44, No. 7, 31 July 2015 (2015-07-31), pp. 734-740<br>ISSN: 1001-1595,<br>      entire document | 1-20 |

Form PCT/ISA/210 (second sheet) (July 2022)

## INTERNATIONAL SEARCH REPORT
### Information on patent family members

International application No.

**PCT/CN2023/098706**

| Patent document cited in search report | | | Publication date (day/month/year) | Patent family member(s) | | | Publication date (day/month/year) |
|---|---|---|---|---|---|---|---|
| CN | 115220077 | A | 21 October 2022 | None | | | |
| CN | 111273327 | A | 12 June 2020 | None | | | |
| CN | 103323867 | A | 25 September 2013 | None | | | |
| US | 2014002300 | A1 | 02 January 2014 | WO | 2012128980 | A1 | 27 September 2012 |
| | | | | US | 9709683 | B2 | 18 July 2017 |
| | | | | US | 2014015712 | A1 | 16 January 2014 |
| | | | | US | 9651677 | B2 | 16 May 2017 |
| | | | | EP | 2689265 | A1 | 29 January 2014 |
| | | | | EP | 2689266 | A2 | 29 January 2014 |
| | | | | WO | 2012128979 | A2 | 27 September 2012 |
| US | 2011267228 | A1 | 03 November 2011 | US | 2011279314 | A1 | 17 November 2011 |
| | | | | US | 8558736 | B2 | 15 October 2013 |
| | | | | US | 8614642 | B2 | 24 December 2013 |
| | | | | WO | 2010096158 | A2 | 26 August 2010 |
| | | | | WO | 2010096159 | A2 | 26 August 2010 |
| | | | | DE | 112010000669 | T5 | 15 November 2012 |
| | | | | DE | 112010000673 | T5 | 06 December 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210844843